# EUROPEAN PATENT APPLICATION

(11) **EP 1 777 139 A1**
(43) Date of publication of application: **25.04.2007**
(21) Application number: 05257815.0
(22) Date of filing: 19.12.2005
(51) Int. Cl.: B62D 5/04

(54) **Electric power sterring apparatus for automobile**

(30) Priority: 24.10.2005 KR 2005100083
(71) Applicant: Mando Corporation, Pyeongtaek-si, Gyeonggi-do (KR)
(72) Inventor: Jo, Heegwon, Gyeonggi-do (KR); Joo, Namgung, Gangwon-do (KR); Song, Jun-gyu 1102-504, Geum-gang APT.,, Gyeongg-do (KR)
(74) Representative: Neobard, William John

(57) **Abstract**

An electrical power steering apparatus for an automobile includes a pinion shaft connected to a steering wheel of the automobile and having a pinion gear formed on a side; a rack bar connected to a wheel of the automobile and having a rack gear adapted to engage with the pinion gear; a motor for generating steering power in proportion to steering torque generated by the steering wheel; a power transmission means connected to a motor shaft of the motor; an intermediate shaft rotatably connected to the power transmission means and having a ball screw positioned on an outer peripheral surface; a ball screw unit having a ball adapted to contact the ball screw and a ball nut adapted to engage with the ball screw via the ball; and a connection member having an upper end coupled to the ball nut and a lower end coupled to the rack bar.

## Description

The present invention relates to an electric power steering apparatus for an automobile. More particularly, embodiments of the present invention relates to an electric power steering apparatus for an automobile having an intermediate shaft provided with a ball screw, apart from a rack bar provided with a rack gear, to reduce the ball screw's diameter and lessen noise generated by the ball, as well as a seal for noise prevention so that, when either the rack gear or the ball screw is defective, the corresponding rack bar or intermediate shaft including the defective component can be replaced with minimum loss of components.

As generally known in the art, power steering apparatuses for automobiles include a hydraulic power steering apparatus utilizing hydraulic pressure of a hydraulic pump, which has been used since its initial introduction, and an electric power steering apparatus utilizing an electric motor, use of which has been gradually universalized since the 1990's.

In the existing hydraulic power steering apparatus, a hydraulic pump, which is a power source for supplying the steering power, is driven by an engine, which causes the hydraulic pump to always consume energy regardless of rotation of a steering wheel. In the electric power steering apparatus, when steering torque is generated by rotation of a steering wheel, a motor supplies steering power in proportion to the generated steering torque. Therefore, in energy efficiency terms, the electric power steering apparatus is more advantageous than the hydraulic power steering apparatus.

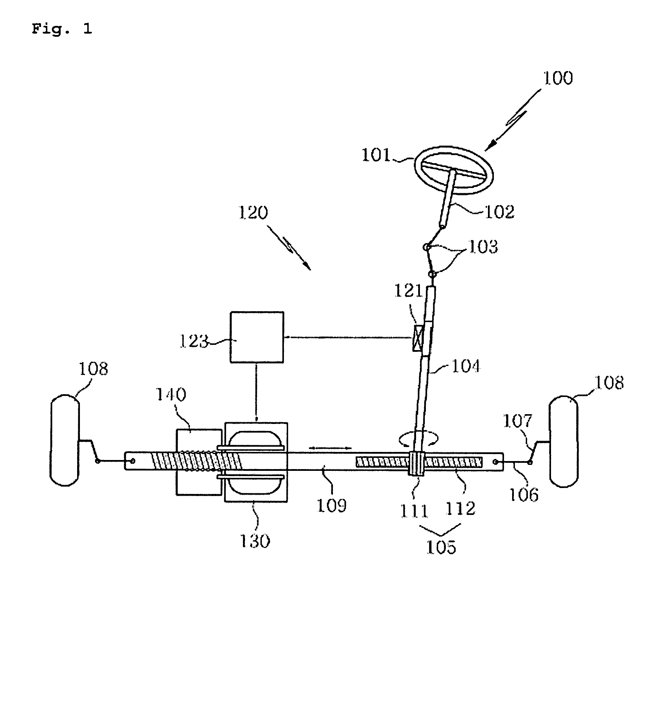

FIG. 1 illustrates the construction of a conventional electric power steering apparatus.

As shown in FIG. 1, a conventional electric power steering apparatus includes a steering system 100, which includes elements from a steering wheel 101 to both wheels 108, and a steering power mechanism 120 for supplying steering power to the steering system 100.

The steering system 100 includes a steering shaft 102 having an upper end connected to the steering wheel 101, so that the steering shaft 102 rotates together with the steering wheel 101, and a lower end connected to a pinion shaft 104 via a pair of universal joints 103. The pinion shaft 104 is connected to a rack bar 109 via a rack-pinion mechanism 105. Both ends of the rack bar 109 are connected to the wheels 108 via tie rods 106 and knuckle arms 107.

The rack-pinion mechanism 105 includes a pinion gear 111 formed on the lower end of the pinion shaft 104 and a rack gear 112 formed on a side of the outer peripheral surface of the rack bar 109 to engage with the pinion gear 111. The rack-pinion mechanism 105 converts the rotational motion of the pinion shaft 104 into a linear motion of the rack bar 109. Particularly, when the driver operates the steering wheel 101, the pinion shaft 104 rotates accordingly. The rotation of the pinion shaft 104 causes the rack bar 109 to move linearly in the shaft direction. The linear motion of the rack bar 109 is transmitted to and operates the wheels 108 via the tie rods 106 and the knuckle arms 107.

The steering power mechanism 120 includes a torque sensor 121 for sensing steering torque applied to the steering wheel 101 by the driver and outputting an electric signal in proportion to the sensed steering torque, an ECU (electronic control unit) 123 for generating a control signal based on the electric signal from the torque sensor 121, a motor 130 for generating steering power based on the control signal from the ECU 123, and a ball screw unit 140 for transmitting the steering power from the motor 103 to the rack bar 109.

The electric power steering apparatus is operated as follows: when the driving wheel 101 is rotated, driving torque is generated and transmitted to the rack bar 109 via the rack-pinion mechanism 105. In addition, the generated steering torque causes the motor 130 to generate steering power, which is transmitted to the rack bar 109 via the ball screw unit 140. As such, the torque generated by the steering system 100 is combined with the steering power generated by the motor 130, so that the rack bar 109 is moved in the shaft direction.

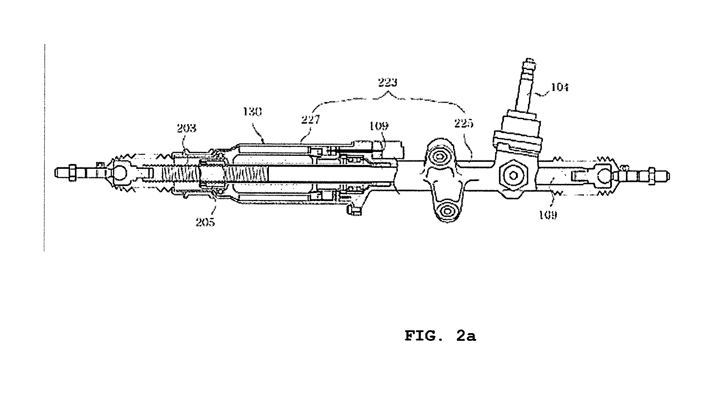

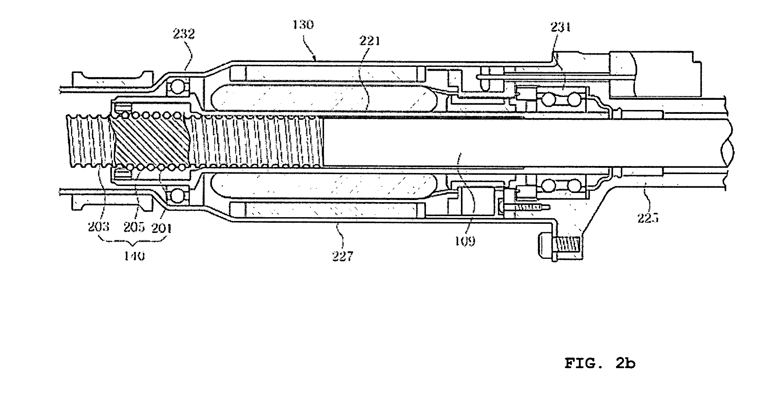

FIGs. 2a and 2b are a partial sectional view and a partially enlarged view of a conventional electric power steering apparatus, respectively.

As shown in FIGs. 2a and 2b, the conventional electric power steering apparatus includes a rack bar 109 extending in the transverse direction of the automobile and having a rack gear (not shown) positioned on a side of the outer peripheral surface thereof; a pinion shaft 104 having a pinion gear adapted to engage with the rack gear; a ball screw unit 140 having a ball nut 205 adapted to engage with a ball screw 203 via a ball 201; and a motor 130 having a motor shaft 221 connected to the ball nut 205.

The pinion shaft 104 is connected to a driving wheel via a driving shaft. The rack bar 109 has a screw formed on a side of the outer peripheral surface thereof with a predetermined depth and is contained in a rack housing 223. The rack housing 223 includes a first housing 225 adjacent to the rack gear and a second housing 227 adjacent to the motor.

The motor 130 is positioned between the rack gear (not shown) of the rack bar 109 and the ball nut 205. The motor 130 generates steering power in proportion to steering torque applied to the steering wheel and transmits the steering power to the rack bar 109 via the ball nut 205.

As shown in FIG. 2b, the first housing 225 supports the right end of the motor shaft 221 with a bearing 231, so that the motor shaft 221 solely rotates inside the first housing 225 without moving in the shaft direction. The second housing 227 rotatably supports the left end of the motor shaft 221 with a bearing 232.

The motor shaft 221 is hollow and surrounds the outer peripheral surface of the rack bar 109. The ball nut 205 is coupled to the inner peripheral surface of the left end of the motor shaft 221.

As mentioned above, the right end of the motor 221 of the conventional electric power steering apparatus is supported by the first housing 225 without moving in the shaft direction, while the left end thereof is supported by the second housing 227. The ball nut 205 is adapted to position the motor 130, which is supported by the left end of the motor shaft 221, between the rack bar 109 of the first housing 225 and the ball nut 205 of the second housing 227.

However, conventional electric power steering apparatuses, which have a rack gear and a ball screw positioned on the outer peripheral surface of a rack bar, as mentioned above, have the following problems:
Firstly, the rack bar must have a diameter large enough to endure loads acting thereon. According to the prior art, the ball screw is formed on a side of the outer peripheral surface of the rack bar, and the diameter of the ball screw is proportional to that of the rack bar. If the diameter of the rack bar increases, however, the ball travels along a larger trajectory and generates much noise.
Secondly, it is difficult to install a seal in such a way that a groove of the ball screw can be filled with lubricant, in an attempt to reduce noise generated by the ball screw unit, because the motor shaft surrounds the outer peripheral surface of the rack bar and the ball nut.
Thirdly, the entire rack bar must be replaced even when only one of the rack gear and the ball screw is defective. This means severe loss of components.

It is an object of embodiments of the invention to at least partly avoid problems of the prior art.

In one aspect, there is provided an electric power steering apparatus for an automobile including a pinion shaft connected to a steering wheel of the automobile and having a pinion gear formed on a side; a rack bar connected to a wheel of the automobile and having a rack gear adapted to engage with the pinion gear; a motor for generating steering power in proportion to steering torque generated by the steering wheel; a power transmission means connected to a motor shaft of the motor; an intermediate shaft rotatably connected to the power transmission means and having a ball screw positioned on an outer peripheral surface; a ball screw unit having a ball adapted to contact the ball screw and a ball nut adapted to engage with the ball screw via the ball; and a connection member having an upper end coupled to the ball nut and a lower end coupled to the rack bar.

An embodiment of the invention will now be described by way of example only in conjunction with the accompanying drawings, in which:
FIG. 1 shows the construction of a conventional electric power steering apparatus;
FIGs. 2a and 2b are a partial sectional view and a partially enlarged view of a conventional electric power steering apparatus, respectively;
FIG. 3a shows the construction of an electric power steering apparatus for an automobile embodying the present invention;
FIG. 3b is a partial section view showing an electric power steering apparatus for an automobile embodying the present invention;
FIG. 3c is a partially enlarged view showing an electric power steering apparatus for an automobile embodying the present invention;
FIG. 4 is a partial section view showing an electric power steering apparatus for an automobile embodying the present invention;
FIG. 5 is a partial section view showing an electric power steering apparatus for an automobile embodying the present invention; and
FIG. 6 is a partial section view showing an electric power steering apparatus for an automobile embodying the present invention.

In the following description and drawings, like reference signs indicate like parts.

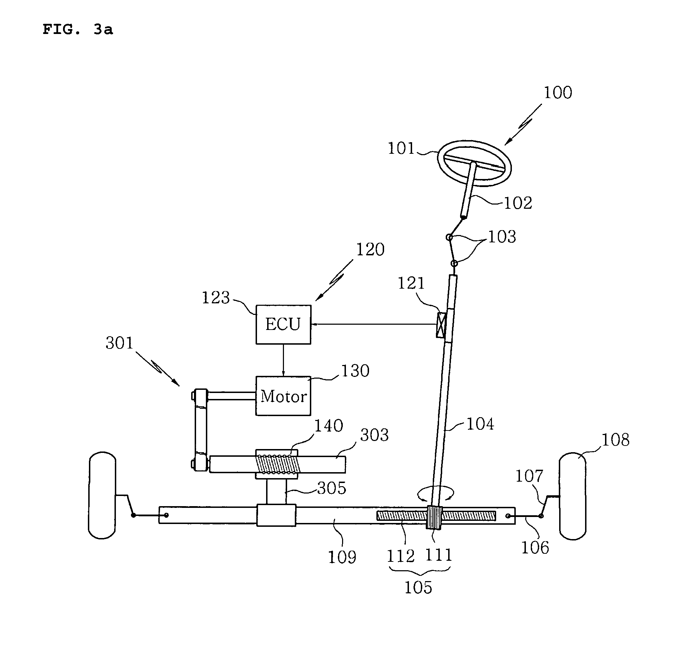

As shown in FIG. 3a, a electric power steering apparatus for an automobile includes a steering system 100, which includes elements from a steering wheel 101 to both wheels 108, and a steering power mechanism 120 for supplying steering power to the steering system 100.

The steering system 100 includes a steering shaft 102 having an upper end connected to the steering wheel 101, so that the steering shaft 102 rotates together with the steering wheel 101, and a lower end connected to a pinion shaft 104 via a pair of universal joints 103. The pinion shaft 104 is connected to a rack bar 109 via a rack-pinion mechanism 105. Both ends of the rack bar 109 are connected to the wheels 108 via tie rods 106 and knuckle arms 107.

The rack-pinion mechanism 105 includes a pinion gear 111 formed on the pinion shaft 104 and a rack gear 112 formed on a side of the outer peripheral surface of the rack bar 109 to engage with the pinion gear 111. When the driver operates the steering wheel 101, the steering system 100 generates steering torque and operates the wheels 108 via the rack-pinion mechanism 105 and the tie rods 106.

The steering power mechanism 120 includes a torque sensor 121 for sensing steering torque applied to the steering wheel 101 by the driver and outputting an electric signal in proportion to the sensed steering torque; an ECU 123 for generating a control signal based on the electric signal from the torque sensor 121; a motor 130 for generating steering power based on the control signal from the ECU 123; an intermediate shaft 303 for receiving the steering power from the motor 130 via a belt-type transmission device 301; and a connection member 305 for transmitting the steering power to the rack bar 109 via the intermediate shaft 303.

The electric power steering apparatus of the first embodiment is operated as follows: when the driving wheel 101 is rotated, driving torque is generated and transmitted to the rack bar 109 via the rack-pinion mechanism 105. In addition, the generated steering torque causes the motor 130 to generate steering power, which is transmitted to the rack bar 109 via the intermediate shaft 303 and the connection member 305. As such, the steering torque generated by the steering system 100 is combined with the steering power generated by the motor 130, so that the rack bar 109 reciprocates left and right.

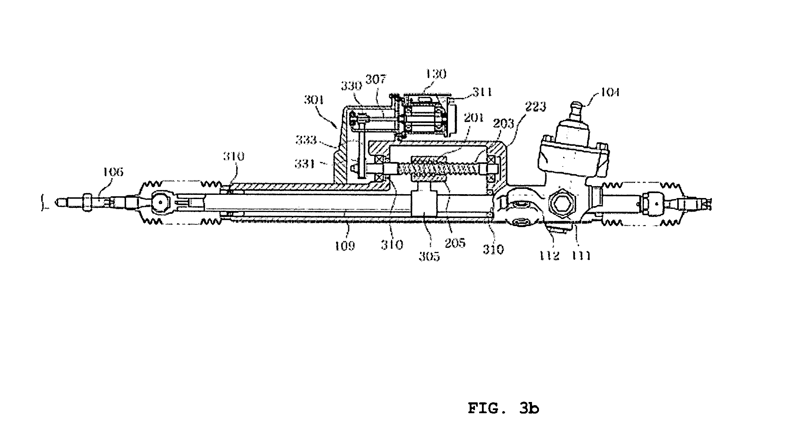

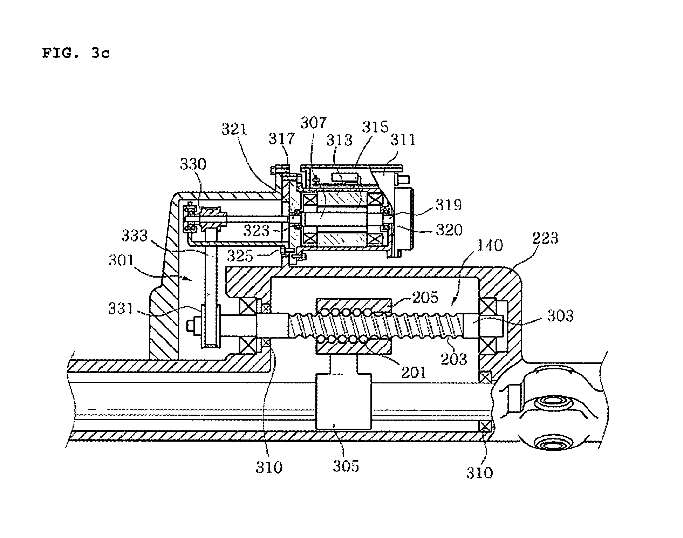

More particularly, as shown in FIGs. 3b and 3c, the electric power steering apparatus of the first embodiment includes a pinion shaft 104 connected to the driving wheel and having a pinion gear formed on a side thereof; a rack bar 109 connected to both wheels of the automobile and having a rack gear formed on a side thereof, which engages with the pinion gear; a motor 130 for generating steering power; an intermediate shaft 303 positioned parallel to the rack bar 109 with a side thereof connected to a motor shaft 307 of the motor 130 via a belt-type transmission device 301 and having a ball screw 203 formed on the other side thereof; a ball screw unit 140 having a ball nut 205 adapted to engage with the ball screw 203 via a ball 201; and a connection member 305 having an upper end coupled to the ball nut 205 and a lower end coupled to the rack bar 109.

The pinion shaft 104 is connected to the steering wheel via the steering shaft and has a pinion gear formed on a side thereof.

The rack bar 109 has both ends connected to wheels of the automobile via tie rods 106 and knuckle arms, respectively, and is positioned inside a rack housing 223. The rack bar 109 has a rack gear 112 formed on a side thereof, which engages with the pinion gear 111. The rack bar 109 has seals 310 formed in predetermined positions inside both ends thereof, respectively, to prevent lubricant from leaking.

The motor 130 includes a motor housing 311; a cover 317 for covering an open end of the motor housing 311; a cylindrical stator 313 positioned inside the motor housing 311; a rotator 315 formed on the interior of the stator 313; and a motor shaft 307 integral with the rotator 315.

The motor shaft 307 is positioned parallel to the rack bar 109 in such a manner that its right end 319 is rotatably supported by a first bearing 320 and its middle portion 321 is rotatably supported by a second bearing 323, which is positioned on the cover 317. The cover 317 is coupled to the motor housing 311 with a bolt 325.

The intermediate shaft 303 is positioned parallel to the rack bar 109 while being spaced from it. The intermediate shaft 303 has a side connected to the motor shaft 307 of the motor 130 via the belt-type transmission device 301 and a ball screw 203 formed on the outer peripheral surface of the other side thereof as a helical groove extending a predetermined length. When the motor 130 generates steering power, it is transmitted to the intermediate shaft 303 via the belt-type transmission device 301. In other words, rotation of the intermediate shaft 303 is interlocked with that of the motor shaft 103.

The intermediate shaft 303 may be coaxial with the motor shaft 307. The intermediate shaft 303 may be connected to the motor shaft 307 via a flexible coupling. The intermediate shaft 303 may be parallel to the motor shaft 307.

In summary, the intermediate shaft 303 is separate from the rack bar 109 and is provided with the ball screw 203. When either the ball screw 203 or the rack gear 112 is defective, the intermediate shaft 303 or rack bar 109, which includes the defective component, may be replaced.

More particularly, the electric power steering apparatus has a rack bar 109 and an intermediate shaft 303, which are separate from each other, so that, when a ball screw 203 or rack gear 112 is defective, it can be replaced with minimum loss of component. In contrast, conventional electric power steering apparatuses have a ball screw 203 and a rack gear 112 positioned on a single rack bar 109, as mentioned above.

A side of the intermediate shaft 303 is placed inside the motor housing 311 while being connected to the motor shaft 307 of the motor 107, and the other side thereof, which is provided with the ball screw 203, is placed inside the rack housing 223 together with the rack bar 109. The intermediate shaft 303 has a seal 310 formed on the outer peripheral surface thereof near parts of the motor housing 311 and the rack housing 233, which contact each other, in order to prevent lubricant from leaking (described later).

The belt-type transmission device 301 includes a first pulley 330 fixed to the motor shaft 307, a second pulley 331 fixed to the left end of the intermediate shaft 303, and a belt 333 for surrounding and connecting the first and second pulleys 330 and 331. As the motor shaft 307 rotates, the fist pulley 330 rotates accordingly and rotational force of the motor shaft 307 is transmitted to the second pulley 331 via the second pulley 331.

The ball screw unit 140 includes a ball 201 adapted to contact the ball screw 203 and a ball nut 205 adapted to engage with the ball screw 203 via a ball 201 while surrounding the outer peripheral surface of the intermediate shaft 303. As the intermediate shaft 303 rotates, the ball 201 moves along the ball screw 203, and the ball nut 205, the inner peripheral surface of which engages with the ball screw 203 via the ball 201, moves in the shaft direction of the intermediate shaft 303. As such, the rotational movement of the motor 130 is converted into a linear movement of the ball nut 205 via the intermediate shaft 303 and the ball screw unit 140.

Even when the rack bar 109 has a larger diameter enabling it to endure heavier loads, the diameter of the intermediate shaft 303, as well as that of the ball screw 203 can be modified as desired, regardless of the diameter of the rack bar 109, because the intermediate shaft 303 is separate from the rack bar 103 and the ball screw 140 is positioned on a side of the outer peripheral surface of the intermediate shaft 303, as mentioned before.

As such, embodiments solve the problem of severe noise inherent to the prior art, which occurs when the diameter of the rack bar 109 increases and the diameter of the ball screw 203 formed on the outer peripheral surface of the rack bar 109 increases accordingly.

In addition, the seals 310 formed in predetermined positioned inside both ends of the rack bar 109 and on the outer peripheral surface of the intermediate shaft 303, respectively, enable the ball screw unit 140 to be impregnated with lubricant in a space of the rack housing 223. Such impregnation with lubricant mitigates noise from the ball screw unit 140. The difficulty in installing seals, which results from complex structure of conventional electrical power steering apparatuses, is solved in this manner.

The connection member 305 has an upper end coupled to the ball nut 205 and a lower end coupled to the rack bar 109 in a predetermined position. As the motor 130 rotates and the ball nut 20 linearly moves left and right, the rack bar 109, which is connected to the ball nut 205 via the connection member 305, linearly moves left and right along the trajectory of motion of the ball nut 205.

When the motor 130 of the electric power steering apparatus is driven to generate steering power, it is transmitted to the rack bar 109 via the motor shaft 307, the first pulley 330, the belt 333, the second pulley 331, the intermediate shaft 303, the ball screw 203, the ball 201, the ball nut 205, and the connection member 305.

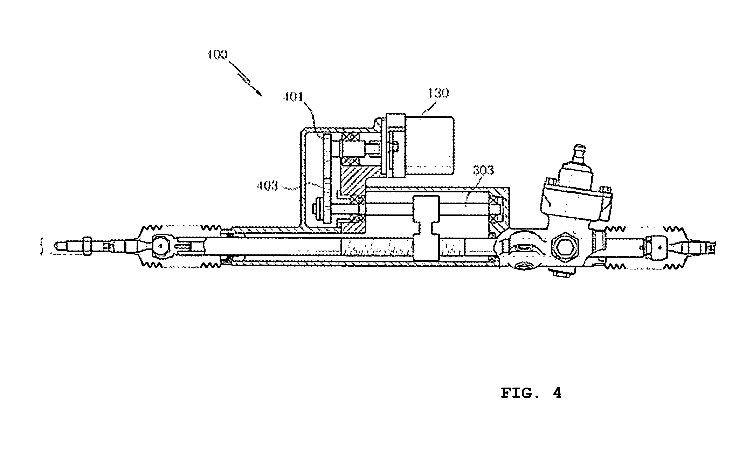

As shown in FIG. 4, an electric power steering apparatus has first and second gears 401 and 403, which are adapted to engage with each other, instead of the first and second pulleys of the first embodiment. As a result, steering power generated by driving of the motor 130 is transmitted to the intermediate shaft 303 via the first and second gears 401 and 402.

The remaining components and operation of the second are identical to those of the first embodiment. Therefore, the same components are given the same reference numerals, and repeated description thereof will be omitted herein.

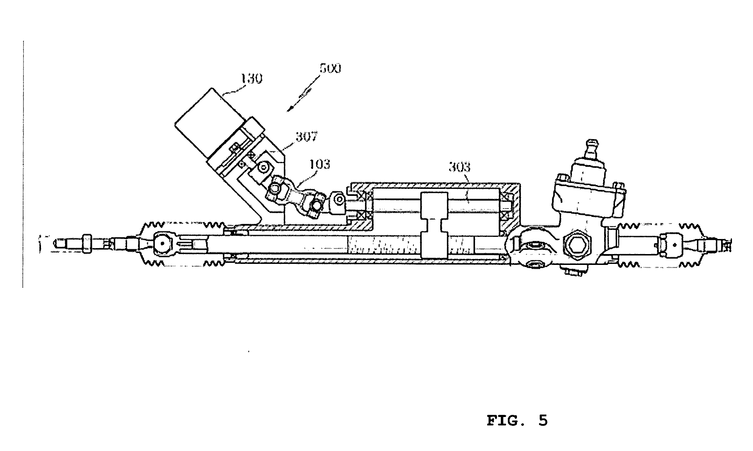

As shown in FIG. 5, the electric power steering apparatus has an intermediate shaft 303 and a motor shaft 307, which are not parallel to each other, compared with those of the first embodiment. Therefore, a universal joint 103 is used to transmit steering power from the motor 130 to the intermediate shaft 303. In an embodiment the universal joint is used when the angle between the intermediate and motor shafts 303 and 307 is 30°.

The remaining components and operation are identical to those of the first embodiment. Therefore, the same components are given the same reference numerals, and repeated description thereof will be omitted herein.

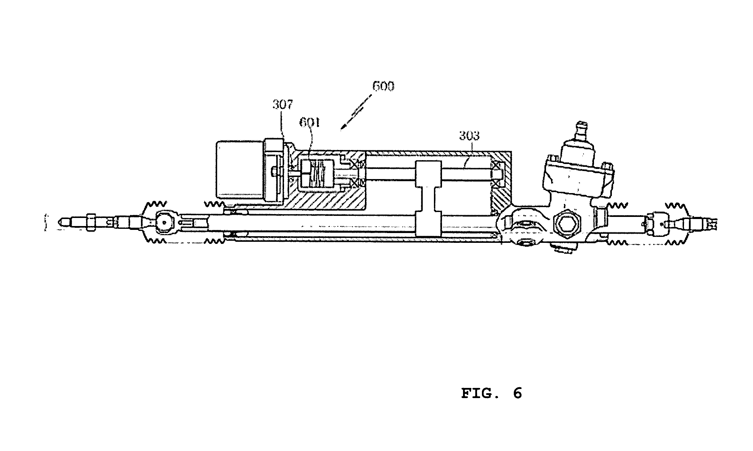

As shown in FIG. 6, a electric power steering apparatus has an intermediate shaft 303 and a motor shaft 307, which are positioned approximately on the same line, compared with those of the first embodiment.

However, it is extremely difficult to completely align the intermediate and motor shafts 303 and 307 coaxially. Therefore, a coupling is required, which can be used even when the intermediate and motors 303 and 307 are positioned somewhat eccentrically. A flexible coupling 601 can meet such requirements. Particularly, the flexible coupling 601 can absorb vibration or impact resulting from errors, regardless of some degree of deviation in position or angle.

As such, the flexible coupling 601 lessens loads on the intermediate and motor shafts 303 and 307 and mitigates vibration or impact. However, use of the flexible coupling 601 is limited by some factors, including diameter of the shafts, condition of the coupling, used torque, and used RPM.

As mentioned above, the electric power steering apparatus has an intermediate shaft provided with a ball screw, apart from a rack bar provided with a rack gear, to reduce the ball screw's diameter and lessen noise generated by the ball, as well as a seal for noise prevention so that, when either the rack gear or the ball screw is defective, the corresponding rack bar or intermediate shaft including the defective component can be replaced with minimum loss of components.

Embodiments of the invention have now been described. The invention itself however is not restricted to the described features but is only limited by the following claims.

## Claims

1. An electric power steering apparatus for an automobile comprising:
a pinion shaft connected to a steering wheel of the automobile and having a pinion gear formed on a side;
a rack bar connected to a wheel of the automobile and having a rack gear adapted to engage with the pinion gear;
a motor for generating steering power in proportion to steering torque generated by the steering wheel;
a power transmission means connected to a motor shaft of the motor;
an intermediate shaft rotatably connected to the power transmission means and having a ball screw positioned on an outer peripheral surface;
a ball screw unit having a ball adapted to contact the ball screw and a ball nut adapted to engage with the ball screw via the ball; and
a connection member having an upper end coupled to the ball nut and a lower end coupled to the rack bar.

2. An electric power steering apparatus for an automobile according to claim 1, wherein the motor shaft has a first pulley, the intermediate shaft has a second pulley, and the power transmission means is a belt for connecting the first and second pulleys.

3. An electric power steering apparatus for an automobile according to claim 1, wherein the motor shaft has a first gear and the intermediate shaft has a second gear adapted to engage with the first gear.

4. An electric power steering apparatus for an automobile according to claim 1, wherein the motor shaft and the intermediate shaft are connected to each other via a universal joint.

5. An electric power steering apparatus for an automobile according to claim 1, wherein the motor shaft and the intermediate shafts are coaxially connected to each other.

6. An electric power steering apparatus for an automobile according to claim 5, wherein the motor shaft and the intermediate shaft are connected to each other via a flexible coupling.

7. An electric power steering apparatus for an automobile according to claim 1, wherein the motor shaft and the intermediate shaft are connected to each other via a flexible coupling.

8. An electric power steering apparatus for an automobile according to claim 1, wherein the intermediate shaft and the rack bar are positioned parallel to each other.

9. An electrical power steering apparatus for an automobile according to claim 1, wherein the motor shaft and the rack bar are positioned parallel to each other.

10. An electric power steering apparatus for an automobile according to claim 1, wherein the motor shaft, the intermediate shaft, and the rack bar are positioned parallel to one another.
